# EUROPÄISCHE PATENTSCHRIFT

(11) **EP 0 879 974 B1**
(45) Veröffentlichungstag und Bekanntmachung des Hinweises auf die Patenterteilung: **19.09.2001**
(21) Anmeldenummer: 98107588.0
(22) Anmeldetag: 25.04.1998
(51) Int. Cl.: F16D 65/09

(54) **Trommelbremse**
Drum brake
Frein à tambour

(30) Priorität: 23.05.1997 DE 19721550
(43) Veröffentlichungstag der Anmeldung: 25.11.1998
(73) Patentinhaber: Continental Teves AG & Co. oHG, 60488 Frankfurt (DE)
(72) Erfinder: Häfner, Horst, 61449 Steinbach (DE)
(74) Vertreter: Portwich, Peter

(56) Entgegenhaltungen:
- EP-A- 0 396 145
- DE-A- 4 020 539
- DE-A- 4 418 955
- FR-A- 2 566 495
- US-A- 2 976 957

## Beschreibung

Die Erfindung betrifft eine Trommelbremse gemäß dem Oberbegriff des Patentanspruchs 1, bei der die wesentlichen Bestandteile an einem am Fahrzeug zu verschraubenden Bremsträgerblech montiert sind.

Bei derartigen gattungsgemäßen Trommelbremsen kann es während des Betriebes häufig zur unerwünschten Entstehung von Bremsgeräuschen (insbesondere Quietschen) kommen. Diese Geräusche werden u.a. an den Berührungsflächen zwischen Bremsträgerblech und der Stirnseite der Bremsbacken durch Reibkontakt verursacht. Diesbezüglich sind schon zahlreiche Versuche unternommen worden, das Entstehen solcher Geräusche zu unterbinden.

So beschreibt die EP-A-0 396 145 eine Trommelbremse mit Bremsbacken, deren Bremsflächen einer Bremstrommel gegenüberliegen. Eine Ankerplatte nimmt dabei die Bremsbacken jeweils an Führungsflächen auf, wobei die Bremsbacken mittels Niederhaltefedern in Anlage an ihren jeweiligen Führungsflächen gehalten werden. Mindestens eine Bremsbacke ist zur Beeinflussung von unerwünschten Bremsgeräuschen an den zugehörigen Führungsflächen derart abgestützt, daß die Bremsbacke durch die Niederhaltefeder in einer Position gehalten wird, in der ihre Bremsfläche in bezug auf Bremstrommel verkantet ist. Dazu sind die einzelnen Führungsflächen an der Ankerplatte auf axial zueinander versetzten Ebenen normal zur Bremstrommelachse angeordnet. Dabei ist es möglich den axialen Versatz der Führungsflächen durch ein Blech zu erreichen, die zwischen der Bremsbacke und der Ankerplatte an einer Führungsfäche angeordnet sind. Letztlich wird durch die verkantete Anordnung der Bremsbacken die Reibleistung der Trommelbremse negativ beeinflußt. Weiterhin sind die Bremsbacken dennoch an die Ankerplatte gekoppelt, da die Bremsbacken zumindest an einigen Führungsflächen direkt mit der Ankerplatte in Kontakt stehen, so daß Schwingungen ausgehend von den Bremsbacken auf die Ankerplatte übertragen werden.

Ferner wird in der Deutschen Offenlegungsschrift DE 40 20 539 A1 eine Trommelbremse mit innenliegenden Bremsbacken beschrieben, die an einem achsfesten Bremsträgerblech schwenkbar gelagert sind und sich an diesem mit ihren Seitenflächen jeweils auf mehreren am Bremsträgerblech befestigten erhabenen und glattflächigen Lagerelementen abstützen. Zur Reduzierung von Geräuschen sind die Lagerelemente selbst aus reibungsarmen oder selbstschmierenden Materialien hergestellt und jeweils innerhalb von Durchgangsöffnungen des Bremsträgerbleches befestigt. Zusätzlich sind die Lagerelemente durch gummielastische Befestigung vom Bremsträgerblech akustisch abgekoppelt. Dabei erweist sich eine derartige Befestigung der Lagerelemente in Durchgangsöffnungen insbesondere als anfällig für Beschädigungen der stopfenartigen Lagerelemente, beispielsweise durch Steinschlag von der Fahrzeugaußenseite her. Die Lagerelemente, die zumindest mit einem Endabschnitt auf der axialen Außenseite durch das Bremsträgerblech hindurchragen, können bei starken Erschütterungen beispielsweise auf einer Schlechtwegstrecke oder aber durch Steinschlag derart beschädigt werden, daß ein sicherer Halt am Bremsträgerblech nicht mehr gewährleistet ist. Insbesondere ergibt sich in diesem Falle die Gefahr des Eindringens von Schmutz in das Innere der Bremstrommel. Dadurch kann die sichere Funktion der gesamten Trommelbremse gefährdet werden.

Ausgehend vom Stand der Technik besteht die Aufgabe der Erfindung darin, eine Trommelbremse mit gattungsgemäßen Gleitelementen für die Bremsbacken anzugeben, die sicher und vor möglichen Beschädigungen geschützt am Bremsträgerblech befestigt sind.

Gelöst wird die Aufgabe durch die Merkmalskombination des Patentanspruches 1. Danach sind die Gleitelemente, die einen direkten Reibkontakt zwischen Bremsträgerblech und Bremsbakke verhindern, jeweils in einer Vertiefung des Bremsträgerbleches durch Einpressen befestigt. Dabei ist die Vertiefung als nicht durchgängige Ausnehmung am Bremsträgerblech ausgebildet, vorzugsweise als Sackloch bzw. als Blechdurchstellung. Dadurch durchragen die stopfenartigen Gleitelemente nicht mehr das Bremsträgerblech und sind somit vor Beschädigungen von der axialen Fahrzeugaußenseite her geschützt (z.B. Steinschlag). Darüber hinaus wird das Eindringen von Schmutzpartikeln in das Innere der Trommelbremse vermieden.

Darüber hinaus besteht die Möglichkeit, die Gleitelemente innerhalb der Vertiefungen zusätzlich noch zu verkleben, um den Halt zu verbessern.

In einer Weiterbildung der Erfindung sind die Gleitelemente aus Gründen einer vereinfachten Montage sowie Verbesserung der Gleiteigenschaften als einfache Kunststoffstopfen ausgeführt. Ein solcher Kunststoffstopfen kann darüber hinaus an der Mantelfläche des in die Vertiefung eingesteckten Abschnittes mit einer Profilierung versehen sein, um einerseits ein montagefreundliches Einstecken in das Bremsträgerblech zu gestatten und andererseits die erforderliche Anpreßkraft zu erzeugen und damit einen sicheren Halt am Bremsträgerblech zu gewährleisten. Die Profilierung kann dabei beispielsweise in Gestalt zumindest einer radialen Erhebung bzw. einer axial sich erstreckenden radial vorstehenden Rippe ausgeführt sein, die beim Einsetzen des stopfenartigen Gleitelementes in die Vertiefung in radialer Richtung elastisch zusammendrückbar ist. Ferner ist zur weiteren Montageerleichterung an dem dem Bremsträgerblech zugewandten Ende des Gleitelementes und/oder am offenen Ende der Vertiefung des Bremsträgerbleches eine Fase vorgesehen.

Ein vorteilhaftes Ausführungsbeispiel der Erfindung wird anhand der Zeichnung dargestellt und im folgenden näher erläutert.

Es zeigen:
- Fig. 1: eine Seitenansicht einer Trommelbremse mit Gleitelementen zwischen Bremsträgerblech und Bremsbacken,
- Fig. 2: eine entlang der Linie A-A geschnittene Ansicht eines Gleitelementes innerhalb einer Vertiefung des Bremsträgerbleches,
- Fig. 3: vier Ansichten eines stopfenartigen Gleitelementes.

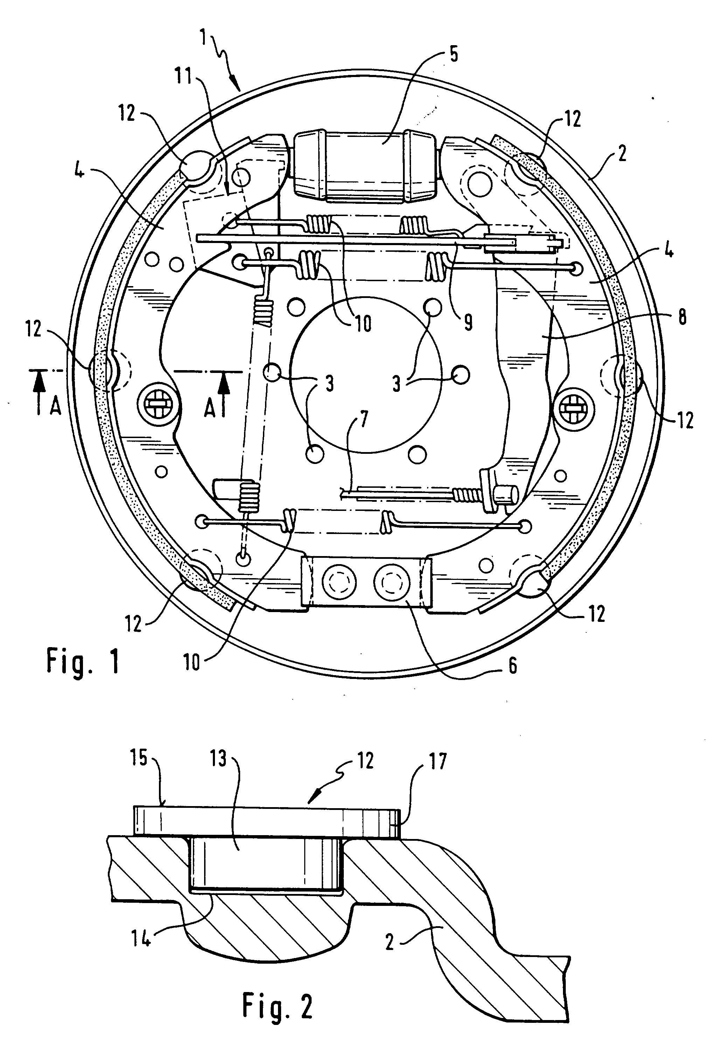

Die in Fig. 1 dargestellte Trommelbremse 1, die mit ihren wesentlichen Bestandteilen wie auch mit ihrer grundsätzlichen Funktionsweise bereits aus dem Stand der Technik bekannt ist, ist innerhalb einer nicht gezeigten Bremstrommel angeordnet. Die wesentlichen Bestandteile der Trommelbremse 1 sind dabei auf einem Bremsträgerblech 2 montiert, das über mehrere Durchgangsbohrungen 3 fahrzeugfest verschraubt werden kann. Im einzelnen besitzt die Trommelbremse 1 zwei im wesentlichen spiegelsymmetrisch angeordnete Bremsbacken 4, die radial aufspreizbar sind und dadurch mit der sie umgebenden Bremstrommel in Eingriff gebracht werden können. Das radiale Aufspreizen der Bremsbacken 4 erfolgt dabei im Falle der in Fig. 1 dargestellten Ausführung einer Simplex-Trommelbremse 1 entweder auf hydraulischem Wege (Betriebsbremsung) oder aber durch mechanische Betätigung (Feststellbremsung). Die hydraulische Betätigung bei Betriebsbremsung wird über einen Radbremszylinder 5 realisiert, der bei Druckbeaufschlagung in der Lage ist, die Bremsbacken um entsprechende Abstützpunkte an einem gegenüberliegenden Abstützbock 6 zu verschwenken und damit radial aufzuspreizen. Gleiches wird erreicht bei mechanischer Betätigung über einen Seilzug 7 sowie einen Betätigungshebel 8, wobei letzterer auf eine der Bremsbacken 4 direkt und über eine Druckstrebe 9 indirekt auf die andere Bremsbacke 4 einwirkt. Ein Lüften der Bremse wird erreicht durch entsprechend angeordnete Zugfedern 10, die die Bremsbacken 4 in ihrer Ausgangslage vor Bremsbetätigung zurückbewegen. Darüber hinaus ist zum Ausgleich des Bremsbelagverschleißes an der Druckstrebe 9 eine selbsttätige Nachstellvorrichtung 11 vorgesehen, die insbesondere für die mechanische Betätigung einen etwa gleichbleibenden Betätigungsweg gewährleistet.

Zur Vermeidung bzw. Reduzierung von unerwünschten Bremsgeräuschen, die u.a. auch auf Reibgeräusche zwischen dem Bremsträgerblech 2 und den daran mit ihrer Stirnfläche anliegenden Bremsbacken 4 zurückgeführt werden, sind zwischen den Stirnflächen der Bremsbacken 4 und dem Bremsträgerblech 2 Gleitelemente 12 vorgesehen. Die am Bremsträgerblech 2 befestigten Gleitelemente 12 sind vorzugsweise über den Umfang der nicht gezeigten Bremstrommel bzw. die Abmessungen der einzelnen Bremsbacken 4 gleichmäßig verteilt, wobei neben der in Fig. 1 dargestellten Anzahl von sechs Gleitleementen auch jede andere Anzahl von mehreren Gleitelementen 12 denkbar ist.

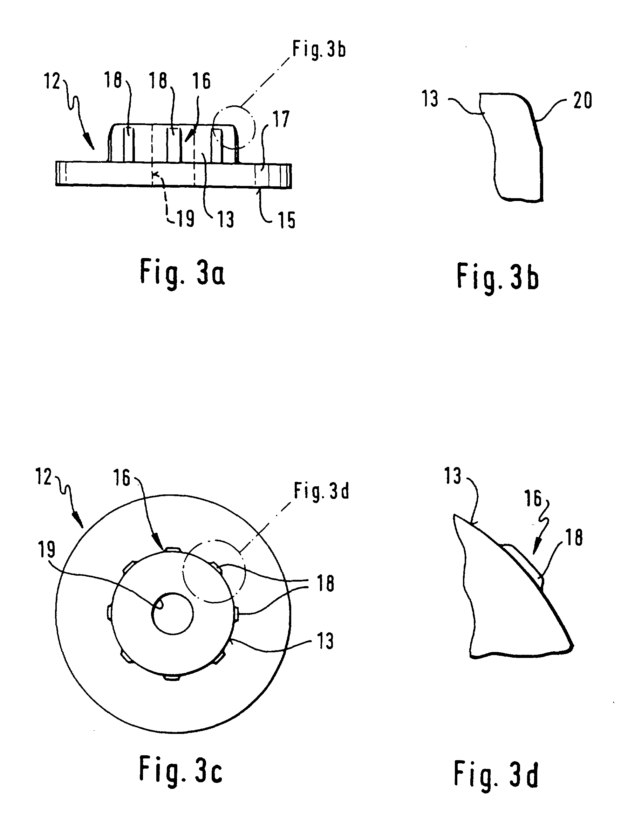

Das genaue Erscheinungsbild der stopfenartigen Gleitelemente 12 sowie ihre Befestigung am Bremsträgerblech 2 ist insbesondere den Fig. 2 und 3 zu entnehmen. Fig. 2 zeigt ein stopfenartiges Gleitelement 12, das mit einem Einsteckabschnitt 13 innerhalb einer Vertiefung 14 des Bremsträgerbleches 2 befestigt ist. Dabei ist das vorzugsweise aus reibungsarmem Material, beispielsweise Kunststoff, hergestellte Gleitelement 12 besonders einfach in die Vertiefung 14 eingepreßt. Dabei wird der Einsteckabschnitt 13 geringfügig elastisch zusammengedrückt und gewährleistet damit den verliersicheren Halt des Gleitelementes 12 am Bremsträgerblech 2. Zur weiteren Erhöhung der Haltekraft ist es zusätzlich möglich, das Gleitelement 12 in der Vertiefung 14 zu verkleben. Die mit ihrer Stirnfläche sich auf einer Gleitfläche 15 des Gleitelementes 12 abstützende Bremsbacke 4 kann frei auf der Gleitfläche 15 entlanggleiten, wobei eine Geräuschentstehung durch geeignete Materialauswahl für das Gleitelement 12 vermieden wird. Die Vertiefung 14 innerhalb des Bremsträgerbleches 2 ist nach Fig. 2 als Durchstellung mittels einer einfachen Blechumformung ausgeführt. Dabei ist die Vertiefung 14 im Gegensatz zu aus dem Stand der Technik bekannten Varianten keineswegs durchgängig, sondern vielmehr als an der axial außenliegenden Seite des Bremsträgerbleches 2 geschlossenes Sackloch ausgeführt. Dadurch kann erfolgreich das Eindringen von Schmutz in das Innere der Bremstrommel verhindert werden und darüber hinaus wird das vorzugsweise aus Kunststoff bestehende Gleitelement 12 vor Steinschlag geschützt. Damit wird selbst bei Auftreten von Steinschlag an der axial außenliegenden Seite des Bremsträgerbleches 2 der sichere Halt der Gleitelemente 12 innerhalb der Vertiefungen 14 nicht beeinträchtigt.

Selbstverständlich ist es nicht zwangsweise erforderlich, die Vertiefung 14 durch eine Blechdurchstellung zu erzeugen, sondern es kann auch jede andere Fertigungsmöglichkeit herangezogen werden (beispielsweise zerspanende Bearbeitungsschritte), die die Herstellung einer nicht durchgängigen, sacklochartigen Vertiefung gestatten.

Fig. 3 zeigt in ihren Ansichten eine bevorzugte Weiterbildung eines Gleitelementes 12 aus Kunststoff, das an der Mantelfläche des in die Vertiefung 14 eingesteckten Abschnittes 13 eine Profilierung 16 aufweist. Insgesamt besitzt das stopfenartige Gleitelement 12 einen radialen Kragen 17, mit dem das Gleitelement 12 im montierten Zustand am Bremsträgerblech 2 anschlägt, und an seinem dem Bremstrommelinneren zugewandten Ende eine Gleitfläche 15, an der die Bremsbacke 4 mit ihrer Stirnfläche anliegt. An dem der Gleitfläche 15 gegenüberliegenden Ende des Gleitelementes 12 steht der Einsteckabschnitt 13 axial hervor und ist zum Einpressen in eine nicht durchgängige Vertiefung 14 des Bremsträgerbleches 2 vorgesehen. Zur Erhöhung der Haltekraft eines eingepreßten Gleitelementes 12 ist an der Mantelfläche des Einsteckabschnittes 13 eine Profilierung 16 vorgesehen, die vorzugsweise aus radialen Erhebungen bzw. aus axial sich erstrekkenden radial vorstehenden Rippen 18 besteht. Die radialen Erhebungen bzw. Rippen 18, die vorzugsweise gleichmäßig über den Umfang des Einsteckabschnittes 13 verteilt angeordnet sind, lassen sich beim Einpressen des Gleitelementes 12 in das Bremsträgerblech 2 radial elastisch zusammendrücken und erzeugen damit die gewünschte Preß- bzw. Haltekraft. Zur weiteren Montageerleichterung bzw. zur Verstärkung der elastischen Verformbarkeit in radialer Richtung besitzt das Gleitelement 12 ein axial verlaufendes zentrales Durchgangsloch 19. Als weitere Hilfe bei der Montage derartiger Gleitelemente 12 dient eine Fase 20, die am axialen Ende des Einsteckabschnittes 13 angeordnet ist und/oder am offenen Ende der Vertiefung 14 des Bremsträgerbleches 2 und damit zusätzlich das Einsetzen des stopfenartigen Gleitelementes 12 vereinfacht.

Allgemein lassen sich nahezu beliebige Profilierungs- 16 bzw. Fasenanordnungen 20 am Gleitelement 12 auf fertigungstechnisch einfachem Wege realisieren. Als Kunststoffspritzteil ist dies beim Gleitelement 12 durch unkomplizierte Umgestaltung des Formwerkzeuges möglich. Auf diesem Wege wäre selbstverständlich auch eine andere als die kreisrunde Grundkontur des Gleitelementes 12 (z.B. oval, vieleckig) umsetzbar, was jedoch unter Umständen den Fertigungsaufwand bei der Herstellung entsprechender Vertiefungen 14 im Bremsträgerblech 2 erhöhen würde.

## Patentansprüche

1. Trommelbremse (1) mit zumindest einer zur Anlage an einer Bremstrommel radial aufspreizbaren Bremsbacke (4), die an einem fahrzeugfesten Bremsträgerblech (2) gelagert ist, wobei zwischen Bremsbacke (4) und Bremsträgerblech (2) wenigstens ein stopfenartiges Gleitelement (12) durch Einpressen befestigt ist, an dem die Bremsbacke (4) verschiebbar anliegt und das einen direkten Reibkontakt zwischen Bremsbacke und Bremsträgerblech verhindert, **dadurch gekennzeichnet, daß** das Gleitelement (12) in einer nicht durchgängigen, sacklochartigen Vertiefung (14) des Bremsträgerbleches (2) angeordnet ist.

2. Trommelbremse (1) nach Anspruch 1, **dadurch gekennzeichnet, daß** das Gleitelement (12) in der Vertiefung (14) des Bremsträgerbleches (2) verklebt ist.

3. Trommelbremse (1) nach einem der vorherigen Ansprüche, **dadurch gekennzeichnet, daß** die Vertiefung (14) als Blechdurchstellung ausgebildet ist.

4. Trommelbremse nach einem der vorherigen Ansprüche, **dadurch gekennzeichnet, daß** das stopfenartige Gleitelement aus einem reibungsarmen Material ausgeführt ist.

5. Trommelbremse (1) nach einem der vorherigen Ansprüche, **dadurch gekennzeichnet, daß** das stopfenartige Gleitelement aus Kunststoff ausgeführt ist.

6. Trommelbremse nach einem der vorherigen Ansprüche, **dadurch gekennzeichnet, daß** das Gleitelement an der Mantelfläche des in die Vertiefung (14) eingesteckten Abschnittes (13) eine Profilierung (16) aufweist, vorzugsweise in Gestalt von zumindest einer radialen Erhebung bzw. axial sich erstreckenden radial vorstehenden Rippe (18) .

7. Trommelbremse nach einem der vorherigen Ansprüche, **dadurch gekennzeichnet, daß** an dem Bremsträgerblech (2) zugewandten Ende des Gleitelementes (12) und/oder am offenen Ende der Vertiefung (14) des Bremsträgerbleches (2) eine Fase (20) vorgesehen ist.

## Claims

1. Drum brake (1) with at least one brake shoe (4) that is radially spreadable for abutment on a brake drum and is mounted on a brake carrier metal sheet (2) formed fast with the vehicle, wherein at least one plug-shaped glide element (12) is secured in a press fit between the brake shoe (4) and the brake carrier metal sheet (2), with the brake shoe (4) being in slidable abutment on the glide element which prevents a direct friction contact between the brake shoe and the brake carrier metal sheet,
**characterized in that** the glide element (12) is arranged in a depression (14) that is non-continuous in the way of a blind-end hole in the brake carrier metal sheet (2).

2. Drum brake (1) as claimed in claim 1,
**characterized in that** the glide element (12) is cemented in the depression (14) of the brake carrier metal sheet (2).

3. Drum brake (1) as claimed in any one of the preceding claims,
**characterized in that** the depression (14) is configured as a sheet-metal punched-through projection.

4. Drum brake as claimed in any one of the preceding claims,
**characterized in that** the plug-shaped glide element is made of a low-friction material.

5. Drum brake (1) as claimed in any one of the preceding claims,
**characterized in that** the plug-shaped glide element is made of plastics.

6. Drum brake as claimed in any one of the preceding claims,
**characterized in that** on the peripheral surface of the portion (13) slipped into the depression (14), the glide element has a profile (16), preferably in the shape of at least one radial projection or axially extending, radially protruding rib (18).

7. Drum brake as claimed in any one of the preceding claims,
**characterized in that** a chamfer (20) is provided on the end of the glide element (12) close to the brake carrier metal sheet (2) and/or at the open end of the depression (14) of the brake carrier metal sheet (2).

## Revendications

1. Frein à tambour (1) comportant au moins une mâchoire de frein (4), qui peut être écartée radialement pour s'appliquer contre un tambour de frein et qui est supportée par une tôle de support de frein (2) solidaire du véhicule, dans lequel entre la mâchoire de frein (4) et la tôle de support de frein (2) est fixé, par enfoncement, un élément glissant (12) en forme de tampon, contre lequel la mâchoire de frein (4) s'applique avec possibilité de déplacement et qui empêche un contact direct par frottement entre la mâchoire de frein et la tôle de support de frein, **caractérisé en ce que** l'élément glissant (12) est disposé dans un renfoncement traversant, en forme de trou borgne (14) de la tôle de support de frein (2).

2. Frein à tambour (1) selon la revendication 1, **caractérisé en ce que** l'élément glissant (12) est collé dans le renfoncement (14) de la tôle de support de frein (2).

3. Frein à tambour (1) selon l'une des revendications précédentes, **caractérisé en ce que** le renfoncement (14) est agencé sous la forme d'une traversée de la tôle.

4. Frein à tambour (1) selon l'une des revendications précédentes, **caractérisé en ce que** l'élément glissant en forme de tampon est réalisé en un matériau présentant un faible frottement.

5. Frein à tambour (1) selon l'une des revendications précédentes, **caractérisé en ce que** l'élément glissant en forme de tampon est réalisé en matière plastique.

6. Frein à tambour (1) selon l'une des revendications précédentes, **caractérisé en ce que** l'élément glissant comporte, sur la surface enveloppe de la partie (13) enfichée dans le renfoncement (14), un profil (16), de préférence sous la forme d'au moins un bossage radial ou d'une nervure (18) qui s'étend axialement et fait saillie radialement.

7. Frein à tambour (1) selon l'une des revendications précédentes, **caractérisé en ce qu'**un biseau (20) est prévu sur l'extrémité, tournée vers la tôle de support de frein (2), de l'élément glissant (12) et/ou sur l'extrémité ouverte du renfoncement (14) de la tôle de support de frein (2).
